Europäisches Patentamt

European Patent Office

Office européen des brevets

(19)

(11) Publication number: **0 021 781**
**A2**

(12)  **EUROPEAN PATENT APPLICATION**

(21) Application number: **80302043.7**

(22) Date of filing: **17.06.80**

(51) Int. Cl.³: **C 04 B 7/16**
**C 04 B 31/06**

(30) Priority: **19.06.79 GB 7921264**

(43) Date of publication of application:
**07.01.81 Bulletin 81/1**

(84) Designated Contracting States:
**BE DE FR GB IT NL SE**

(71) Applicant: **TAC CONSTRUCTION MATERIALS LIMITED**
**20 St. Mary's Parsonage**
**Manchester M3 2NL(GB)**

(72) Inventor: **Hinton, Michael**
**153 Chapeltown Road**
**Bromley Cross Nr. Bolton BL7 9AJ(GB)**

(74) Representative: **Hadfield, Robert Franklin et al,**
**20, St. Mary's Parsonage**
**Manchester M3 2NL(GB)**

(54) **Water-settable compositions, shaped article made thereof and process for the production of such an article.**

(57) A water-settable composition suitable for the manufacture of non-combustible cement-based articles comprises (a) a major proportion, forming at least 50% by weight of the composition, of a mixture of non-crystalline blast furnace slag and Portland cement, the Portland cement forming 10% to 33% by weight of the mixture, and (b) minor proportions of reinforcing vitreous fibres and web-forming fibres. The composition when set with water matures to a product whose cement matrix is less erosive to the vitreous fibres than is a matrix in which Portland cement is the predominant cementitious constituent, and more stable to carbon dioxide than a matrix based on a supersulphated cement.

EP 0 021 781 A2

Croydon Printing Company Ltd.

- 1 -

Water-settable compositions and use thereof

This invention relates to water-settable compositions suitable for the manufacture of non-combustible cement-based articles, especially articles reinforced with vitreous fibres.

Non-combustible cement-based articles reinforced with glass or like fibres, such as fibres of mineral wool, can be made by first forming an aqueous slurry of Portland cement containing the reinforcing vitreous fibres and web-forming fibrous material (usually cellulosic fibres). The aqueous slurry, which may contain small proportions of an agent (e.g. china clay) to modify the properties of the finished product, is then de-watered and formed to the desired shape. During de-watering, the escape of excessive amounts of cement from the slurry is prevented by the web-forming fibre that is present. After shaping, the set product can be allowed to stand in air, or heated in steam, or otherwise treated to bring about curing of the cement.

Maturing of the set Portland cement is accompanied by the release of lime in the cement matrix, and this leads to erosion of the reinforcing vitreous fibres. Although erosion may be slow, as with the well known alkali-resistant zirconia glasses, it is accompanied by a decrease in the tensile strength of the vitreous fibres and hence, over the years, by a significant decrease in tensile strength of the composite of which they form part. In wet conditions, or in a damp atmosphere, erosion proceeds faster than in dry conditions. When the product is one which must maintain a high strength - for example corrugated roofing, which is continually subject to wind loading - the loss in strength consequent on erosion of the vitreous fibres results in a considerably shortened working life.

The present invention involves the use of non-crystalline blast furnace slag as the predominant ingredient of the cement matrix of a vitreous fibre reinforced composite. Non-crystalline blast furnace slag is the material obtained by finely dividing the vitreous phase produced by pouring into cold water molten blast furnace slag formed in the production of iron, and is ordinarily sold in ground form for admixture with Portland cement to improve the resistance of cement-based concrete (e.g. concrete building foundations) to an acidic environment (e.g. a site containing calcium sulphate).

In order to reduce the erosion of glass fibre reinforcement in cement-based composites, it has been proposed in UK Patent Specification No.1,521,030 to form the matrix material from a supersulphate cement, and in particular to use a dry cement mix which comprises at least 70% (and preferably at least 75%) by weight of non-crystalline blast furnace slag and an amount of calcium sulphate activator forming 7 to 25% (and preferably 10 to 15%) by weight of the mix. The cement mix may also contain an alkaline accelerator, usually at a level of up to 5% by weight, e.g. about 2% by weight of lime or about 5% by weight of Portland cement.

- 3 -

However, the long-term stability of a matrix formed from such a cement mix is adversely affected by carbon dioxide, whether atmospheric or in the form of aqueous solution; for carbon dioxide reacts with the ettringite crystal phase ($3CaO.Al_2O_3.3CaSO_4.32H_2O$) which forms a significant part of a supersulphate cement matrix, and such reaction weakens the matrix.

We have now found that the strength of a cement/vitreous fibre composite can be maintained longer at an acceptably high value by employing as the cement matrix a non-crystalline blast furnace slag which incorporates a proportion of Portland cement forming from 10 to 33% by weight of the combined amount of slag and Portland cement.

According to the invention, a water-settable composition suitable for the manufacture of non-combustible cement-based articles comprises (a) a major proportion, forming at least 50% by weight of the composition, of a mixture of non-crystalline blast furnace slag and Portland cement, the Portland cement forming from 10 to 33% by weight of the mixture, and (b) minor proportions of vitreous fibres and web-forming fibres. The vitreous fibres are suitably present in an amount forming from 1 to 10%, preferably 2 to 5%, by weight of the composition. Other reinforcing fibres, whether organic (e.g. polyamide) or inorganic, may if desired also be included in the composition. The web-forming fibres are suitably present in an amount forming from 1 to 10%, preferably 2 to 5%, by weight of the composition. The web-forming fibres are preferably cellulosic, and are then suitably present in an amount of 1 to 5% by weight, but can for example be fibres of tricalcium silicate dihydrate, suitably of aspect ratio (i.e. length:thickness) 25:1 or more, milled mineral wool fibres, or (for pressure pipes, for example) polyethylene or polypropylene fibres of the kind called
'synthetic pulp'.

Preferably, the mixture (a) forms at least 75% by weight
of the composition; and preferably, the Portland cement
forms from 10 to 25% by weight of the combined amount of
slag and Portland cement.

A small amount - not more than 5% by weight of the
composition, and suitably 1 to 3% by weight thereof - of
gypsum or other form of calcium sulphate can be included
in order to improve the handling characteristics
(modulus of rupture, for example) of the set but uncured
composite. There can also be included an accelerator of
the kind used to increase the rate at which ordinary
Portland cement increases in strength after setting;
calcium chloride or calcium formate, at a level not
greater than about 1% by weight of the composition, are
examples of such accelerators.

The composition of the invention may also contain small
amounts of flocculants and pigments.

The composition can be set with water, and cured, to
produce shaped articles such as slabs, blocks, sheets,
boards, roofing, and pipes following any of the common
manufacturing processes, including the Hatschek process,
the Mazza process, the Magnani process, processes using
a simple press, and flow-on board processes such as that
described in German Specification DAS 1,220,247 and
OLS 1,941,424. Preferably, in order to produce a
composite with a cement matrix capable of attaining
maximum or near-maximum hardness in 2-3 days, instead of
the 3 weeks period that is usual with a matrix of
ordinary Portland cement, curing is carried out by
immersing the set material in hot water (40-100°C) or in
an atmosphere saturated with water vapour at that temperature or higher e.g. 105°C.

The compositions of the invention are particularly useful in the manufacture of cured products having a density in the range 1200-2250 kg/m$^3$.

The invention is further illustrated by the following Examples, which utilise a non-crystalline blast furnace slag (available as CEMSAVE (Trade Mark) from Frodingham Cement Co, Ltd, Scunthorpe, Humberside, England) of the following properties:

Analysis (% by weight):

$SiO_2$, 35.0; $Al_2O_3$, 14.1; $CaO$, 38.3; $MgO$, 9.0;

$Fe_2O_3$, 0.34; $MnO$, 0.50; $TiO_2$, 0.45; $S^t$, 1.66;

$S^{2-}$, 1.59

Surface area: 300 - 400 m$^2$/kg

Glass count (content of vitreous material): not less than 95% as determined by light transmission test in tribromomethane

- 6 -

## Example 1

A water-settable composition can be made from the following ingredients

|                                                                                              | % by weight |
|----------------------------------------------------------------------------------------------|-------------|
| Alkali-resistant glass fibre (length 1.25cm; filament diameter 14 $\mu$m; 15 mol% $ZrO_2$ content) | 3.0         |
| Bleached kraft pulp (Canadian standard freeness 150°)                                        | 4.0         |
| Ordinary Portland cement                                                                     | 18.0        |
| Non-crystalline blast furnace slag (passing 200 $\mu$m sieve)                                 | 75.0        |

An aqueous slurry was prepared by throughly agitating the ingredients listed above with water (temperature, 30°C) in a proportion water: total solids = 3:1, and the slurry thus formed was run (appropriately diluted) on a Hatschek machine to produce flat sheets which were cured in air at ambient temperature for 3 weeks. The product had dry density 1600 kg/m$^3$, modulus of rupture 7.5 MPa, impact strength (Charpy) 5.3 kJ/m$^2$ and water absorption 24% by weight.

In a procedure alternative to that of the above Example, the product stripped from the cylinder of the Hatschek machine was moulded into corrugated sheets to give material suitable for use as roofing.

Individual glass fibres were carefully extracted from the cured product of the above Example after lapses of time and after treatments of the product as set out below, and the tensile strength of the extracted glass fibres was then measured and compared with that of fibres indentical except that they had been included in a product whose matrix was of ordinary Portland cement. Results were:

| | Tensile strength of fibres $(GN/m^2)$ | |
|---|---|---|
| Time and Treatment | From product of Example | From Hatschek product having a matrix of ordinary Portland cement |
| 1. Fibre recovered from agitated aqueous slurry as first prepared | $1.4\pm0.2$ | $1.4\pm0.2$ |
| 2. 12 months storage in air at ambient temperature | $1.4\pm0.2$ | $1.2\pm0.2$ |
| 3. As 2, followed by 50 days immersion in water at 50°C | $1.3\pm0.2$ | $0.6\pm0.1$ |
| 4. As 2, followed by 80 days immersion in water at 50°C | $1.3\pm0.2$ | $0.3\pm0.1$ |

- 8 -

The accelerated aging produced by the conditions in 4 above is reckoned to be equivalent to 50 or more years under ordinary conditions of use.  The strength of the glass fibre recovered from the product of the invention is clearly better than that of those fibres recovered from the matrix of ordinary Portland cement.


<u>Example 2</u>

| | % by weight |
|---|---|
| Alkali-resistant glass fibre | 3.5 |
| Bleached kraft pulp | 4.75 |
| Ordinary Portland cement | 17.00 |
| Non-crystalline blast furnace slag | 67.75 |
| Ball clay | 7.00 |

An aqueous slurry was prepared by thoroughly agitating the ingredients listed above with water (temperature 30°C) in a proportion water:solids = 3:1 and the slurry thus formed was run (appropriately diluted) on a Hatschek machine to produce flat sheets which after initial setting in warm air (30°C) for 24 hours were cured in hot water (80°C) for 24 hours.  The flat sheet then had a dry density of 1550 kg/m$^3$, a modulus of rupture of 16 MPa (tested wet), impact strength (Charpy) 6.5 kJ/m$^2$ (tested wet) and water absorption 24% by weight.

Individual glass fibres were carefully extracted from the cured product of the above example after lapses of time and treatments of the product as set out below, and the tensile strength of the extracted glass fibres was then measured and compared with that of fibres identical except that they had been included in a product whose matrix was of blast furnace slag mixed with ordinary Portland cement in the ratio 65: 35. Results were:

Tensile strength of Fibres

$(GN/m^2)$

| Time and Treatment | From Product of Example | From Hatschek Product having a matrix blast furnace slag: ordinary Portland cement 65 : 35 |
|---|---|---|
| 1. After preparation of slurry by agitation | $1.4\pm0.2$ | $1.4\pm0.2$ |
| 2. After formation of the uncured product | $1.4\pm0.2$ | $1.4\pm0.2$ |
| 3. As 2, after curing at 80°C in water for 24 hrs. | $1.4\pm0.2$ | $1.1\pm0.2$ |
| 4. As 3, after 9 days immersion in water at 80°C | $1.2\pm0.2$ | $0.6\pm0.1$ |

The accelerated aging produced by the conditions in 4 is reckoned to be equivalent to 50 or more years.

— 1`... —

CLAIMS:-

1.    A water-settable composition suitable for the manufacture of non-combustible cement-based articles, comprising

(a)    a major proportion, forming at least 50% by weight of the composition, of a mixture of non-crystalline blast furnace slag and Portland cement, the Portland cement forming from 10% to 33% by weight of the mixture, and

(b)    minor proportions of reinforcing glass fibres and web-forming fibres.

2.    A water-settable composition according to claim 1 in which the mixture (a) forms at least 75% by weight of the composition.

3.    A composition according to claim 1 or 2, in which the vitreous fibres form 1 to 10% by weight of the composition.

4.    A composition according to claim 1 or 2, in which the vitreous fibres form 2 to 5% by weight of the composition.

5.    A composition according to any one of claims 1 to 4, in which the web-forming fibres form 1 to 10% by weight of the composition.

6.    A composition according to claim 5, in which the web-forming fibres form 2 to 5% by weight of the composition.

— 11 —

7.  A composition according to any one of claims 1 to 5, in which the web-forming fibres are cellulosic fibres and form not more than 5% by weight of the composition.

8.  A composition according to any one of claims 1 to 7, in which Portland cement forms from 10 to 25% by weight of the mixture of slag and Portland cement.

9.  A non-combustible shaped article made by setting with water, and curing, a composition according to any preceding claim.

10. A method of making a non-combustible shaped article comprising setting with water a composition according to any one of claims 1 to 8, and curing the set composition by immersion in water at 40 to 100°C.

11. A method of making a non-combustible shaped article comprising setting with water a composition according to any one of claims 1 to 8, and curing the set compositon by immersion in an atmosphere saturated with water vapour at a temperature in the range 40°C up to about 105°C.

12. A water-settable composition substantially as described with reference to the Examples herein.